Europäisches Patentamt

European Patent Office

Office européen des brevets

(19)

(11) Publication number: **0 520 094 A1**

## EUROPEAN PATENT APPLICATION

(12)

(21) Application number: **91201656.5**

(22) Date of filing: **27.06.91**

(51) Int. Cl.5: **C09K 11/78**, C09K 11/85, G21K 4/00

(43) Date of publication of application:
**30.12.92 Bulletin 92/53**

(84) Designated Contracting States:
**AT BE CH DE DK ES FR GB GR IT LI LU NL SE**

(71) Applicant: **AGFA-GEVAERT naamloze vennootschap**
**Septestraat 27**
**B-2640 Mortsel(BE)**

(72) Inventor: **Dooms Philip**
**Oude Terelststraat 29**
**B-2650 Edegem(BE)**
Inventor: **Van Havenbergh Jan Emiel**
**Leeuwerikenlaan 18**
**B-2070 Zwijndrecht(BE)**

(54) **X-Ray phosphor composition for X-ray intensifying screen.**

(57)  An X-ray phosphor mixture consisting of :
(1) a monoclinic M' structure yttrium or yttrium/gadolinium strontium tantalate or niobate phosphor, and
(2) a phosphor with empirical formula : $(Ba_{1-x},Sr_x)F_yX_z:Eu^{2+(3+)}$, wherein :
X is halogen other than fluorine, but represents at least 80 atom % of Br,
x is a value in the range $0 \leq x \leq 0.75$, but is prefereably zero,
y is in the range $0.8 \leq y \leq 1.2$ and $y + z = 2$; and
wherein (1) to (2) are present in a weight ratio range of 5/95 to 95/5.

EP 0 520 094 A1

1. Field of the invention.

The present invention relates to an X-ray phosphor composition and X-ray intensifying screen containing same.

2. Background of the invention

In radiography the interior of objects is reproduced by means of penetrating radiation, which is high energy radiation belonging to the class of X-rays, gamma-rays and high-energy elementary particle radiation, e.g. beta-rays, electron beam or neutron radiation. For the conversion of penetrating radiation into visible light and/or ultraviolet radiation luminescent substances, called phosphors, are used.

In a conventional radiographic system an X-ray radiograph is obtained by X-rays transmitted imagewise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said screen irradiates a contacting photographic silver halide emulsion layer film which after exposure is developed to form therein a silver image in conformity with the X-ray image.

For use in common medical radiography the X-ray film comprises a transparent film support double-side coated with a silver halide emulsion layer. During the X-ray irradiation said film is arranged in a cassette between two X-ray conversion screens each of them making contact with its corresponding silver halide emulsion layer.

To improve image definition single-side coated silver halide emulsion films are exposed in contact with only one screen and are applied in e.g. in mammography, autoradiography and in particular fields of non-destructive testing (NDT) known as industrial radiography. An autoradiograph is a photographic record formed through the intermediary of penetrating radiation emitted by radioactive material contained in an object, e.g. microtome cut for biochemical research.

Phosphors suited for use in the conventional radiographic system must have a high prompt emission of fluorescent light on X-ray irradiation and low afterglow in favour of image sharpness. Phosphors should further have a good chemical stability, e.g. with regard to moisture.

As described in US-P 4,180,740 moisture resistance of phosphor screens containing rare-earth oxyhalide phosphors is improved by mixing them with an europium activated barium fluoride chloride phosphor. No reference has been made to a synergistic effect in screen speed that could be obtained by mixing said phosphors.

According to US-P 4,054,799 X-ray intensifying screens are provided containing a mixture of europium-activated bariumfluorochloride and relatively impure calcium tungstate, the latter in about 5% to 95% by weight ratio with respect to the former phosphor. From Fig. 4 of said US-P can be learned that within the above defined mixing ratio a synergistic (i.e. super-additive) effect is obtained in relative speed with regard to a same coverage of individually applied phosphors. Such synergistic effect could not be predicted.

According to US-P 4,088,894 X-ray intensifying screens are provided containing a mixture of europium-activated (Ba,Sr)fluorochloride or fluorobromide and particular rare earth oxyhalide phosphors such as LaOBr(Tm,Tb) phosphors. The latter phosphors have relatively small and well-formed crystalline particles which become interdispersed with the larger crystalline particles of the former phosphor.

3. Summary of the invention

It is an object of the present invention to provide an X-ray phosphor composition and an X-ray intensifying screen containing same wherein said screen when X-ray exposed in combination with a photographic silver halide emulsion film shows a synergistic effect with regard to the product of photographic speed (S) and signal to noise ratio (SNR) of said film and with regard to the (geometric mean) i.e. square root (SORT) of the product of said photographic speed (S) and the image resolution expressed by square wave response (SWR).

Other objects and advantages of the present invention will become clear from the following description.

In accordance of the present invention an X-ray phosphor mixture is provided, wherein said mixture essentially consists of :
    (1) a monoclinic M' structure yttrium or yttrium/gadolinium strontium tantalate or niobate phosphor, and
    (2) a phosphor with empirical formula : $(Ba_{1-x},Sr_x)F_yX_z:Eu^{2+(3+)}$, wherein :

X is halogen other than fluorine, but represents at least 80 atom % of Br,

x is a value in the range $0 \leq x \leq 0.75$. but is preferably zero,

y is in the range $0.8 \leq y \leq 1.2$, and $y + z = 2$; and

wherein (1) to (2) are present in a weight ratio range of 5/95 to 95/5.

Particularly suitable tantalate and niobate phosphors are represented by the following empirical formula :

$$Ln_{1-x-(2/3)y-(1/3)z}M''_yM'_zDO_4 :xR^{3+}$$

wherein :

M'' is Sr,

M' is Li, optionally present in admixture with Na and/or K,

Ln represents Y or a mixture of Y and Gd,

D is at least one element from the group consisting of Ta and Nb,

R is at least one activator selected from the group consisting of Tm, Ce, Pr, Sm, Eu, Tb, Dy and Yb or the base material being self-activating,

x is a value in the range $0 \leq x \leq 0.05$,

y is a value in the range $1x10^{-5} \leq y \leq 1$, and

z is avalue in the range of $1x10^{-4} \leq z \leq 0.1$.

A preferred phosphor (1) corresponds to following empirical formula :

$$(Y_{1-x(2/3)y-(1/3)z},Sr_y,Li_z)DO_4 :xR^{3+},$$

wherein :

D is Ta or Nb,

R represents a dopant metal selected from the group consisting of Tm, Ce, Pr, Sm, Eu and Tb, and

x, y and z have the definition given above.

In another aspect of the invention an X-ray intensifying screen is provided containing said phosphor mixture of phosphors (1) and (2) in a supported or self-supporting binder layer, and wherein said screen through the presence of said mixture when exposed information-wise with X-rays in contact with a photographic silver halide emulsion film shows a synergistic effect (i) with regard to the product of photographic speed (S) and signal to noise ratio (SNR) of the image obtained by development in said film, and (ii) with regard to the square root of the product of said photographic speed (S) and the image resolution expressed by square wave response (SWR) of the image obtained in said film.

4. Brief description of the drawings

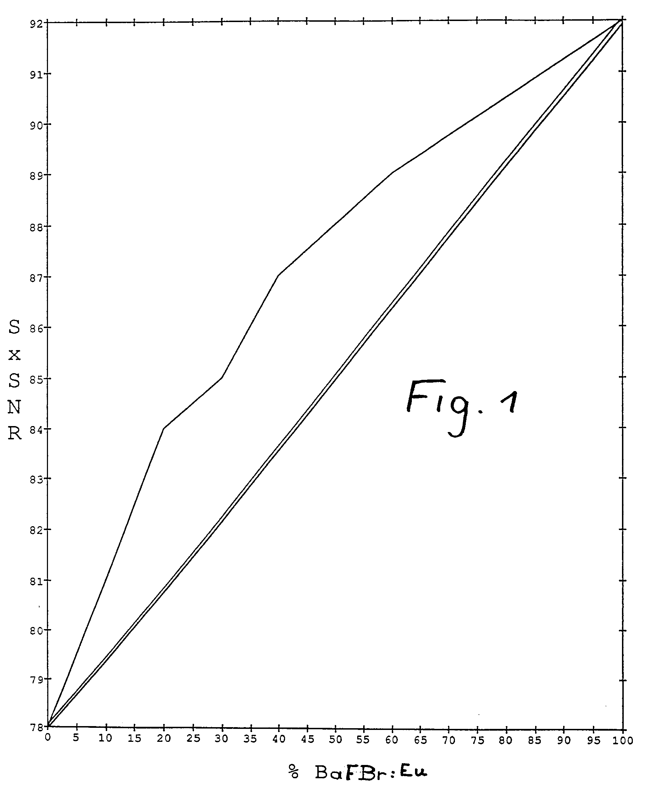

Fig. 1 represents a graph wherein the percental content of a BaFBr:Eu phosphor in its mixture with a tantalate phosphor as defined in present Example 1 is put in the abscissa and the product of speed (S) and signal to noise ratio (SNR) at 1 line pair as defined furtheron is put in the ordinate.

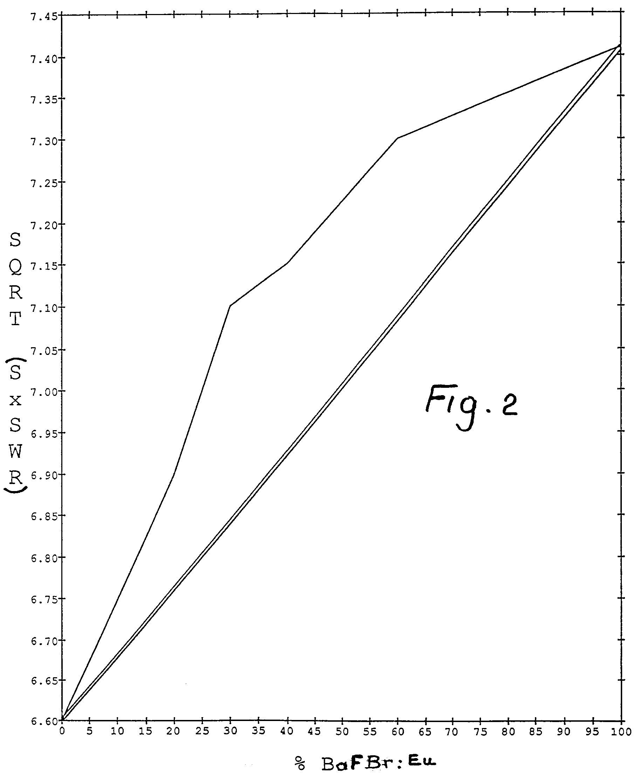

Fig. 2 represents a graph wherein the percental content of BaFBr:Eu phosphor in admixture with the above defined tantalate phosphor (1) has been plotted in the abscissa and the geometric mean, i.e. the square root, of the product of speed (S) and square wave response (SWR) at 1 line pair as defined in said Example has been plotted in the ordinate.

5. Detailed description of the invention

The preparation of phosphors (1) is described in published European patent application (EP-A) 0 202 875. The average grain size of said phosphors is preferably in the range of 2 to 20 micron, more preferably in the range of 5 to 6 micron.

The preparation of the barium fluorobromide phosphors (2) proceeds analogously to the preparation of barium fluorochloride phosphors described e.g. in GB-P 1,161,871 and 1,254,271 and in US-P 4,088,894. The average grain size of phosphor (2) is preferably in the range of 2 to 20 micron, and more preferably in the range of 2 to 6 micron.

A preferred barium fluorobromide phosphor has the following empirical formula :.BaFBr:Eu$_{0.05}$. The preparation of said phosphor is carried out in such a way that at least part of the europium-activator is in the trivalent state. The phosphor has a high prompt emission on X-ray exposure but is not particularly suited for use as storage phosphor in computed radiography as described e.g. in Radiology 148, p. 833-838, September 1983.

Both phosphors (1) and (2) are emitting in the near UV and blue region of the visible spectrum, i.e. mainly in a wavelength range of 360 to 450 nm, and as such can be used in conjunction with a photographic silver halide emulsion film having inherent sensitivity in that spectrum range, e.g a duplitized silver halide emulsion layer film of the type described in GB-P 1 477 637 which has to be read therefor in conjunction herewith.

Preferred phosphor compositions of the present invention comprise phosphor (1) and phosphor (2) in a weight ratio range of 80/20 to 20/80.

The phosphor mixture composition according to the present invention provides the possibility to produce X-ray conversion screens that have a higher brightness than phosphor screens containing solely the tantalate phosphor (1) such in the same coverage as for the mixture of phosphors (1) and (2). Such may result in medical diagnosis in the receipt of a lower X-ray dose for the patient.

With the present phosphor mixture at the expense of the obtained gain in speed an improvement in image-sharpness can be realized.

So, according to one embodiment a phosphor mixture of tantalate or niobate phosphor (1) and of barium fluorobromide phosphor (2) is applied in a binder layer on a fluorescent light absorbing anti-halation layer, e.g. a carbon black containing layer, whereby an improved image-sharpness is obtained at still the same speed that can be realized with a screen containing solely the tantalate phosphor and such applied for gaining speed on a fluorescent light reflecting support, e.g. containing white titanium dioxide.

The gain in speed makes it also possible to apply thinner phosphor layers whereby on screen-film contact-exposure the image-sharpness is improved.

Common X-ray conversion screens comprise in order : a support (also called substrate), a layer comprising phosphor particles dispersed in a suitable binder and a protective coating coated over the phosphor containing layer to protect said layer during use. Further, a primer layer is sometimes provided between the phosphor containing layer and the substrate to closely bond said layer thereto.

A radiographic screen is generally prepared by the following manufacturing process.

Phosphor particles are mixed with a dissolved binder in a suitable mixing ratio to prepare a dispersion. Said dispersion is uniformly applied to a substrate by a known coating technique, e.g. doctor blade coating, roll coating, gravure coating or wire bar coating, and dried to form a luminescent layer fluorescing by X-ray irradiation and called hereinafter fluorescent layer. For the preparation of highly abrasion resistant and chemically resistant phosphor-binder layers the binder is cured. Curing of the binder may proceed photochemically by means of UV radiation or with electron beam (EB) as described e.g. in Research Disclosure December 1977, item 16435 or proceeds purely chemically as described e.g. in US-P 4,508,636.

In the preparation of the phosphor screen having a primer layer between the substrate and the fluorescent layer, the primer layer is provided on the substrate beforehand, and then the phosphor dispersion is applied to the primer layer and dried to form the fluorescent layer. After the formation of the fluorescent layer, a protective layer is generally provided on top of the fluorescent layer.

In common medical radiography the screens are fixed inside a cassette allowing the arrangement of a double-side coated silver halide emulsion film inbetween. In the radiographic exposure step one silver halide emulsion layer is exposed by the fluorescent light of a front screen (the screen most close to the X-ray source) and the other silver halide emulsion layer is exposed by the fluorescent light emitted by the back screen which is the screen struck by the X-rays that have penetrated already the photographic material.

Front and back screen may be asymmetrical in that e.g. their sensitometric properties, thickness, phosphor coverage and phosphor composition may be different.

It is general knowledge that sharper images with less noise are obtained with phosphor particles of smaller mean particle size, but light emission efficiency declines with decreasing particle size. Thus, the optimum mean particle size for a given application is a compromise between imaging speed and image sharpness desired.

The photostimulable phoshors are in the form of a layer applied to a support, or applied as a self-supporting layer or sheet. In the latter case the self-supporting screen is realized e.g. by "hot-pressing" using a thermoplastic binder for dispersing therein the phosphor particles. The hot-pressing technique operates without the use of solvents in the production of the phosphor-binder layer.

According to another procedure a self-supporting phosphor sheet is obtained by coating a coating composition containing the phosphor dispersed in an organic binder solution onto a temporary support, e.g. glass plate, wherefrom the coated and dried self-supporting layer is stripped off.

Non-limitative survey of binders of the phosphor containing layer

In most applications the phosphor layers contain sufficient binder to give structural coherence to the layer. In view of a possible phosphor recovery from worn-out screens the binder of the phosphor containing layer is soluble and remains soluble after coating. Useful binders include proteinaceous binders, e.g. gelatin, polysaccharides such as dextran, gum arabic, and synthetic polymers such as polyvinyl butyral polyvinyl acetate, nitrocellulose, ethylcellulose, vinylidene chloride-vinyl chloride copolymer, polyalkyl (meth)acrylate, vinyl chloride-vinyl acetate copolymer, polyurethane, cellulose acetate, cellulose acetate butyrate, polyvinyl alcohol, polystyrene, polyester, etc. These and other useful binders are disclosed e.g. in US 2502529, US 2887379, US 3617285, US 3300310, US 3300311 and US 3743833.

A mixture of two or more of these binders may be used, e.g., a mixture of polyethyl acrylate and cellulose acetobutyrate.

The weight ratio of phosphor to binder determines the light emission of the screen and the image-sharpness. Generally, said ratio is within the range of from 1:1 to 89:11, preferably from 80:20 to 89:11.

Thickness of the phosphor layer

The thickness of the phosphor layer, which may differ depending on the required sensitivity of the radiographic screen may be within the range of from 50 to 1000 micron, preferably from 50 to 500 micron, more preferably from 150 to 250 micron.

Two or more phosphor layers with different thickness and/or different phosphor/binder ratio and/or different phosphor particle size may be used.

Radiographic screens for medical diagnosis purposes have according to a particular embodiment a gradual intensification along their length and/or width and are called -n that case gradual screens. Graduality can be achieved by gradually increasing the thickness of the phosphor layer over the length or width of the screen or by incorporating into the protective layer or into an interlayer between the protective layer and phosphor containing layer a gradually increasing amount of dye capable of absorbing the light emitted by the phosphor. According to another convenient technique graduality is obtained by halftone printing of a dye or ink composition absorbing the light emitted by the screen. By varying the screen dot size in the halftone print, i.e. by gradually varying the percent dot area over the length or width of the screen graduality can be obtained in any degree. The halftone printing can proceed on the phosphor containing layer which thereupon is covered with the protective coating or proceeds by applying the protective coating by halftone printing, e.g. by gravure roller or silk screen printing.

Non-limitative survey of support materials for radiographic screens

Examples of the support material include cardboard, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminum foil and aluminum alloy foil; ordinary papers; baryta paper; resin-coated papers; pigment papers containing titanium dioxide or the like; and papers sized with polyvinyl alcohol or the like. A plastic film is preferably employed as the support material.

The plastic film may contain a light-absorbing material such as carbon black, or may contain a light-reflecting material such as titanium dioxide or barium sulfate. The former is appropriate for preparing a high-resolution type radiographic screen, while the latter is appropriate for preparing a high-sensitivity type radiographic screen.

Examples of preferred supports include polyethylene terephthalate, clear or blue colored or black colored (e.g., LUMIRROR C, type X30 supplied by Toray Industries, Tokyo, Japan), polyethylene tereph-thalate filled with $TiO_2$ or with $BaSO_4$.

These supports may have thicknesses which may differ depending on the material of the support, and may generally be between 60 and 1000 micron, more preferably between 150 and 250 micron from the standpoint of handling,

Coating of the phosphor layer

The phosphor layer can be applied to the support by employing a method such as vapour deposition, sputtering and spraying but is usually applied by the following procedure.

Phosphor particles and a binder are added to an appropriate solvent as described hereinafter, and then mixed to prepare a coating dispersion comprising the phosphor particles homogeneously dispersed in the binder solution. Said coating dispersion may further comprise a dispersing agent and plasticizer and filler material as described hereinafter.

The coating dispersion containing the phosphor particles and the binder is applied uniformly onto the surface of the support to form a layer of the coating dispersion. The coating procedure may proceed according to any conventional method such as doctor blade coating, dip-coating or roll coating.

After applying the coating dispersion onto the support, the coating dispersion is then heated slowly to dryness so as to complete the formation of a phosphor layer.

In order to remove as much as possible entrapped air in the phosphor coating composition it can be subjected to an ultra-sonic treatment before coating. Before applying the protective coating composition the phosphor-binder layer (as described e.g. in US-P 4,059,768) can be calendered to improve the phosphor packing density in the dried layer.

Useful solvents for the binder of the phosphor containing layer

Examples of solvents employable in the preparation of the phosphor coating dispersion include lower alcohols such as methanol, ethanol, n-propanol and n-butanol ; chlorinated hydrocarbons such as methylene chloride and ethylene chloride; ketones such as acetone, butanone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether; methyl glycol ; and mixtures of the above-mentioned solvents.

Useful dispersing agents for the phosphor particles

The coating dispersion may contain a dispersing agent to improve the dispersibility of the phosphor particles therein, and may contain a variety of additives such as a plasticizer for increasing the bonding between the binder and the phosphor particles in the phosphor layer.

Examples of the dispersing agent include ionic and nonionic well -known dispersing agents or combinations thereof, e.g. , GAFAC RM 610 (tradename) a polyoxyethylene (20) sorbitan monopalmitate and monolaurate marketed by General Aniline and Film Company (GAF), New York, USA, polymeric surfactants such as the acrylic graft copolymer, PHOSPHOLIPON 90 (tradename) marketed by Nattermann-Phospholipid GmbH, Köln, W. Germany, silane dispersing agents and surfactants e.g. DOW CORNING 190 (tradename) and SILANE Z6040 (tradename) marketed by Dow Corning Corporation, Midland, Michigan, USA or glymo 3-glycidyloxypropylmethoxysilane or organosulfate polysilanes, unsaturated p-aminamide salts and high molecular acid esters such as ANTI TERRA U 80 (tradename) marketed by BYK-Chemie GmbH, Wesel , W. Germany, high molecular unsaturated polyesters. Dispersing agents are added in an amount of 0.05 to 10 % by weight as compared to the phosphor.

Useful plasticizers

Examples of plasticizers include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; polymeric plastizers, e.g. and polyesters of polyethylene glycols with aliphatic dicarboxylic acids such as polyester of triethylene glycol with adipic acid and polyester of diethylene glycol with succinic acid.

Useful fillers

The coating dispersion may also contain a filler (reflecting or absorbing) or may be colored by a colorant capable of absorbing light within the spectrum emitted by the phosphor or capable of absorbing excitation light in the case of a stimulable X-ray conversion screen. Examples of colorants include Solvent Orange 71 (Diaresin Red 7), Solvent Violet 32 (Diaresin Violet A), Solvent Yellow 103 (Diaresin Yellow C) and Solvent Green 20 (all four supplied by Mitsubishi Chemical Industries, Japan), Makrolex Rot GS, Makrolex Rot EG, Makrolex Rot E2G, Helioechtgelb 4G and Helioechtgelb HRN (all five marketed by Bayer, Leverkusen, Germany), Neozaponfeuerrot G and Zaponechtbraun BE (both marketed by BASF, Ludwigshafen, W. Germany).

Subbing or interlayer layer compositions

In the preparation of a radiographic screen, one or more additional layers are occasionally provided between the support and the phosphor containing layer, so as to improve the bonding between the support and the phosphor layer, or to improve the sensitivity of the screen or the sharpness and resolution of an image provided thereby. For instance, a subbing layer or an adhesive layer may be provided by coating polymer material such as gelatin over the surface of the support on the phosphor layer side. A light-reflecting layer may be provided, e.g. by vacuum-depositing an aluminium layer or by coating a pigment-binder layer wherein the pigment is e.g. titanium dioxide. For the manufacture of light-absorbing layer, serving as anti-halation layer, carbon black dispersed in a binder may be used but also any known anti-halation dye. Such additional layer(s) may be coated on the support either as a backing layer or interposed between the support and the phosphor containing layer(s). Several of said additional layers may be applied in combination.

According to a particular embodiment the present radiographic screens are used in non-detructive testing (NDT), of metal objects, where more energetic X-rays and gamma rays are used than in medical X-ray applications.

In screens applied for industrial radiography it has been found advantageous to combine the fluorescent phosphor layer with a metal layer or metal support, wherein the metal has an atomic number in the range of 46 to 83 as described e.g. in US-P 3,872,309 and 3,389,255. The metal layer in contact with the phosphor-containing layer acts as an emitter of photo-electrons and secondary X-rays when struck by highly energetic X-rays or gamma rays. The secondary lower energy X-rays and photo-electrons are absorbed in the adjacent phosphor-containing layer at a higher efficiency than the highly energetic X-rays and gamma rays emitted by an industrial X-ray apparatus, such results in an increase in photographic speed. Said metal layers or supports have the additional advantage of reducing the scattered radiation whereby image-sharpness is improved.

According to a particular embodiment described in Research Disclosure September 1979, item 18502 image-sharpness is improved by incorporating in the X-ray intensifying screen between the phosphor-containing layer and the support and/or at the rearside of the support a pigment-binder layer containing a non-fluorescent pigment being a metal compound, e.g. salt or oxide, of a heavy metal whose atomic number (Z) is at least 46. A preferred pigment used for that purpose is lead oxide (PbO) being applied e.g. at a coverage of 100 to 400 g of lead per $m^2$.

The invention is illustrated by the following examples without however limiting it thereby. All ratios and percentages are by weight unless mentioned otherwise.

COMPARATIVE EXAMPLES 1-11

Preparation of X-ray intensifying screens for comparative tests

A phosphor coating compositions were prepared by intimately mixing the following components :

| | |
|---|---|
| BaFBr:Eu$_{0.05}$ | P g |
| (Y,Sr$_{0.075}$,Li$_{0.30}$)TaO$_4$ | Q g |
| cellulose acetobutyrate (30 % in 2-butanone) | 13.33 g |
| polyethyl acrylate (30 % in ethyl acetate) | 42.2 g |
| ethyl acetate | 9.75 g |
| methyl glycol | 19.3 g |
| 2-butanone | 9.75 g |
| dispersing agent GAFAC RM 610 (tradename) | 0.4 g |

Said composition was doctor blade coated onto a subbed 200 micron thick polyethylene terephthalate support at a phosphor coverage of 700 g/$m^2$ and dried.

By roll coater onto the dried phosphor-containing layer a cellulose acetobutyrate layer having a dry thickness of 10 micron was applied as protective layer.

For comparative test purposes screens 1 to 11 were made containing respectively the following ratios by weight of BaFBr:Eu to said tantalate phosphor : 100/0. 90/10, 80/20, 70/30, 60/40, 50/50, 40/60, 30/70, 20/80, 10/90 and 0/100. P + Q = 200 g.

X-ray exposure in combination with radiographic film

Pairs of screens of the same composition were arranged in the same type of cassette and between the screens and in contact therewith a same duplitized (double-side silver halide emulsion coated) was inserted,

In manufacturing the film a silver bromoiodide emulsion (2 mole % of silver iodide) was used containing silver halide grains with an average grain size of 1.25 micron. The emulsion ready for coating contained per kg an amount of silver halide corresponding to 190 g of silver nitrate and 74 g of gelatin. As stabilizing agents the silver halide emulsion contained per kg 545 mg of 5-methyl-7-hydroxy-s-triazolo[1,5-a]pyrimidine and 6.5 mg of 1-phenyl-5-mercaptotetrazole.

The above emulsion was coated on both sides of a double side subbed polyethylene terephthalate support. To each of the dried silver halide emulsion layers a protective layer was applied containing 1.1 $g/m^2$ of gelatin, hardened with formaldehyde and containing perfluorocaprylic acid as antistatic agent. The hardening proceeded by adding 0.03 grams of formaldehyde per gram of gelatin. Each silver halide emulsion layer contained an amount of silver halide equivalent with 7 g of silver nitrate per $m^2$.

The X-ray exposure proceeded according to ISO/DP9236 with 77 median kVp X-rays for chest exposure.

Processing of the exposed material

The processing of the thus exposed silver halide emulsion material proceeded with the following developing liquid, followed by fixing and rinsing at the indicated temperature and processing time.

The processing proceeded with the following developing liquid, fixing and rinsing liquid at the indicated temperature and processing time.

| Composition of the developing liquid (pH : 10.1) - (35 °C, 27 s). | |
|---|---|
| Hydroquinone | 30 g/l |
| Potassium sulphite | 64 g/l |
| 1-Phenyl-3-pyrazolidinone | 1.5 g/l |
| Potassium bromide | 4 g/l |
| Glutardialdehyde | 4.7 g/l |
| The pH was adjusted at 10.1 with bicarbonate/carbonate buffer. | |

| Composition of the fixing liquid (pH : 4.3) - (34 °C, 18 s). | |
|---|---|
| Ammonium thiosulphate | 132 g/l |
| Sodium sulphite | 10.8 g/l |
| Aluminium sulphate | 5.4 g/l |
| The pH was adjusted at 4.3 with acetic acid/acetate buffer. | |

The rinsing proceeded with tap water at a temperature of 27 °C for a duration of 28 s.

Test procedure

The signal-to-noise (SNR) ratio is defined here as the quotient of the square wave response (SWR) and of the graininess known as $_D$. The SWR values used in connection with Fig. 1 and 2 were determined at 1 line pair.

The determination of the SWR value proceeded as described in DIN 6867, 2nd draft 1988.

The determination of the photographic speed S proceeded according to the International Standard method ISO/DP9236 (42N2063) Revised edition of Nov. 1986.

From the solid line curve in Fig. 1 can be learned that there is a synergistic effect with regard to the product of speed S and signal to noise ratio SNR (SxSNR in the ordinate) when using phosphor mixtures according to the present invention compared with the screens containing the phosphors individually. The double line represents the course followed by the normally expected arithmetic addition of the values of said SxSNR product. The percentage by weight of BaFBr:Eu of the phosphor mixture has been put in the abscissa.

From the solid line curve in Fig. 2 can be learned that there is a synergistic effect with regard to the geometric mean of the product of speed S and SWR [SQRT(SxSWR) in the ordinate] at 1 line pair when using the above defined phosphor mixtures compared with the screens containing the phosphors individually.

The double line represents the course followed by the normally expected arithmetic addition of the values of said geometric mean. The percentage by weight of BaFBr:Eu of the phosphor mixture has been put in the abscissa.

## Claims

1. An X-ray phosphor mixture consisting of :
   (1) a monoclinic M' structure yttrium or yttrium/gadolinium strontium tantalate or niobate phosphor, and
   (2) a phosphor with empirical formula : $(Ba_{1-x},Sr)F_yX_z:Eu^{2+(3+)}$, wherein :
   X is halogen other than fluorine, but represents at least 80 atom % of Br,
   x is a value in the range $0 \leq x \leq 0.75$, but is prefereably zero,
   y is in the range $0.8 \leq y \leq 1.2$, and $y + z = 2$; and
   wherein (1) to (2) are present in a weight ratio range of 5/95 to 95/5.

2. X-ray phosphor mixture according to claim 1, wherein the tantalate and niobate phosphors are represented by the following empirical formula :

   $$Ln_{1-x-(2/3)y-(1/3)z}M''_yM'_zDO_4:xR^{3+}$$

   wherein :
   M'' is Sr,
   M' is Li, optionally present in admixture with Na and/or K,
   Ln is Y or a mixture of Y and Gd,
   D is at least one element from the group consisting of Ta and Nb,
   R is at least one activator selected from the group consisting of Tm, Ce,
   Pr, Sm, Eu, Tb, Dy and Yb or the base material being self-activating,
   x is a value in the range $0 \leq x \leq 0.05$,
   y is a value in the range $1x10^{-5} \leq y \leq 1$, and
   z is avalue in the range of $1x10^{-4} \leq z \leq 0.01$.

3. X-ray phosphor mixture according to claim 2, wherein the tantalate or niobate phosphors correspond to the following empirical formula :

   $$(Y_{1-x-(2/3)y-(1/3)z},Sr_y,Li_z)DO_4:xR^{3+},$$

   wherein :
   D is Ta or Nb,
   R represents a dopant metal selected from the group consisting of Tm, Ce,
   Pr, Sm, Eu and Tb, and
   x, y and z have the definition given in claim 2.

4. X-ray phosphor mixture according to any of the preceding claims, wherein the average grain size of phosphor (1) is in the range of 2 to 20 micron.

5. X-ray phosphor mixture according to any of the preceding claims, wherein the average grain size of phosphor (2) is in the range of 2 to 6 micron.

6. X-ray phosphor mixture according to any of the preceding claims, wherein phosphor (2) has the following empirical formula : BaFBr:Eu, europium being used as a dopant in divalent and partially in trivalent state.

7. An X-ray intensifying screen containing in a supported or self-supporting binder layer an X-ray phosphor mixture consisting of :
   (1) a monoclinic M' structure yttrium or yttrium/gadolinium strontium tantalate or niobate phosphor, and

(2) a phosphor with empirical formula : $(Ba_{1-x},Sr_x)F_yX_z:Eu^{2+(3+)}$, wherein :

X is halogen other than fluorine, but represents at least 80 atom % of Br,

x is a value in the range $0 \leq x \leq 0.75$, but is prefereably zero,

y is in the range $0.8 \leq y \leq 1.2$, and y + z = 2; and

wherein (1) to (2) are present in a weight ratio range of 5/95 to 95/5, and wherein said screen through the presence of said mixture when exposed information-wise with X-rays in contact with a photographic silver halide emulsion film shows a synergistic effect (i) with regard to the product of photographic speed (S) and signal to noise ratio (SNR) of the image obtained by development in said film, and (ii) with regard to the square root of the product of said photographic speed (S) and the image resolution expressed by square wave response (SWR) of the image obtained in said film.

8. X-ray intensifying screen according to claim 7, wherein the tantalate and niobate phosphors are represented by the following empirical formula :

$$Ln_{1-x-(2/3)y-(1/3)z}M''_yM'_zDO_4:xR^{3+}$$

wherein :

M'' is Sr,

M' is Li, optionally present in admixture with Na and K,

Ln is Y or a mixture of Y and Gd,

D is at least one element from the group consisting of Ta and Nb,

R is at least one activator selected from the group consisting of Tm, Ce, Pr, Sm, Eu, Tb, Dy and Yb or the base material being self-activating,

x is a value in the range $0 \leq x \leq 0.05$,

y is a value in the range $1 \times 10^{-5} \leq y \leq 1$, and

z is avalue in the range of $1 \times 10^{-4} \leq z \leq 0.1$.

9. X-ray intensifying screen according to claim 8, wherein the tantalate or niobate phosphors correspond to the following empirical formula :

$$(Y_{1-x-(2/3)y-(1/3)z},Sr_y,Li_z)DO_4:xR^{3+},$$

wherein :

D is Ta or Nb,

R represents a dopant metal selected from the group consisting of Tm, Ce, Pr, Sm, Eu and Tb, and

x, y and z have the definition given in claim 8.

10. X-ray intensifying screen according to any of claims 7 to 9, wherein the average grain size of phosphor (1) is in the range of 2 to 20 micron.

11. X-ray intensifying screen according to any of claims 7 to 10, wherein the average grain size of phosphor (2) is in the range of 2 to 6 micron.

12. X-ray intensifying screen according to any of claims 7 to 11, wherein the weight ratio of phosphor to binder is within the range of from 1:1 to 89:11.

13. X-ray intensifying screen according to any of claims 7 to 12, wherein the phosphor layer has a thickness in the range of 50 to 1000 micron.

14. X-ray intensifying screen according to any of claims 7 to 13, wherein the phosphor layer is present on a fluorescent light absorbing anti-halation layer.

Fig. 1

% BaFBr:Eu

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 435 241 (NICHIA)  <br><br> * the whole document * <br><br>--- | 1,4-7, 10-14 | C09K11/78 <br> C09K11/85 <br> G21K4/00 |
| A,D | EP-A-0 202 875 (NICHIA) <br> * the whole document * <br><br>----- | 2,3,8,9 | |

**TECHNICAL FIELDS SEARCHED (Int. Cl.5)**

C09K
G21K

The present search report has been drawn up for all claims

| Place of search | Date of completion of the search | Examiner |
|---|---|---|
| THE HAGUE | 17 FEBRUARY 1992 | DROUOT M.C. |